# EUROPEAN PATENT APPLICATION

(11) **EP 4 579 699 A2**
(43) Date of publication of application: **02.07.2025**
(21) Application number: 24210833.0
(22) Date of filing: 05.11.2024
(51) Int. Cl.: H01G 4/008, H01G 4/012, H01G 4/12, H01G 4/232, H01G 4/30

(54) **MULTILAYER ELECTRONIC COMPONENT COMPRISING A CRACK EXTENDING TO AN INSIDE OF THE BODY FROM AN END OF ONE OF THE EXTERNAL ELECTRODES**

(30) Priority: 27.12.2023 KR 20230192398
(71) Applicant: Samsung Electro-Mechanics Co., Ltd., Suwon-si, Gyeonggi-do (KR)
(72) Inventor: Lee, Byung Hun, Suwon-si, Gyeonggi-do (KR); Han, Chan Su, Suwon-si, Gyeonggi-do (KR); Kim, Kyung Sik, Suwon-si, Gyeonggi-do (KR); Kim, Ka Young, Suwon-si, Gyeonggi-do (KR)
(74) Representative: Grünecker Patent- und Rechtsanwälte PartG mbB

(57) **Abstract**

A multilayer electronic component (100) comprising:

a body (110) having first and second surfaces (1, 2) opposing each other in a first direction (T), third and fourth surfaces (3, 4) opposing each other in a second direction (L) and connected to the first and second (1, 2) surfaces, fifth and sixth surfaces (5, 6) opposing each other in a third direction (W) and connected to the first to fourth (1-4) surfaces, the body (110) including a dielectric layer (111) and first and second internal electrodes (121) alternately disposed in the first direction (T) with the dielectric layer (111) interposed therebetween;

a first external electrode (131) connected to the first internal electrode (121), the first external electrode (131) disposed on the third surface (3) and extending onto portions of the first and second surfaces (1, 2); and

a second external electrode (132) connected to the second internal electrode (122), the second external electrode (132) disposed on the fourth surface (4) and extending onto portions of the first and second surfaces (1, 2),

wherein the body (110) includes an overlapping region (110a) in which the first internal electrode (121) overlaps the second internal electrode (122) adjacent thereto in the first direction (T) with the dielectric layer (111) interposed therebetween,

a length in the second direction (L) of a central portion of the overlapping region (110a) in the first direction (T) is greater than that of both ends of the overlapping region (110a) in the first direction (T), and

the body (110) has a crack (CR) extending to an inside of the body (110) from an end of at least one of the first and second external electrodes (131, 132), the crack (CR) spaced apart from the overlapping region (110a).

## Description

### CROSS-REFERENCE TO RELATED APPLICATION(S)

This application claims benefit of priority to Korean Patent Application No. 10-2023-0192398 filed on December 27, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, is a chip-type condenser mounted on the printed circuit boards of various types of electronic products such as imaging devices, including a liquid crystal display (LCD) and a plasma display panel (PDP), computers, smartphones, and mobile phones, and serves to charge or discharge electricity therein or therefrom. Such a multilayer ceramic capacitor may be used as a component of various electronic devices due to having a small size, ensuring high capacitance and being easily mounted.

Recently, MLCCs have been used not only in IT devices such as existing smartphones and laptops, but also in electronics and industrialized products such as electric vehicles and autonomous driving, increasing the demand for high-reliability MLCCs for high voltage. To ensure the reliability of MLCCs, it may be necessary to improve flexural strength of MLCCs.

MLCCs may include a body and an external electrode disposed on the body. When flexural stress is applied to a MLCC, the stress tends to be concentrated on an end of the external electrode, and accordingly, a crack may occur from end of the external electrode toward the inside of the body.

When such a crack propagates to an overlapping region of the body in which internal electrodes having different polarities are alternately disposed, a short circuit may occur in the MLCC. In order to resolve the above issue, a method of reducing the number of laminated internal electrodes or reducing a size of the overlapping region may be considered, but reducing the number of laminated internal electrodes or the size of the overlapping region may lower capacitance of an MLCC and DC-bias properties.

Accordingly, it may be necessary to study an MLCC having excellent electrical properties such as capacitance and DC-bias while preventing short circuits from occurring due to a crack propagating to an overlapping region of a body.

### SUMMARY

An aspect of the present disclosure provides a multilayer electronic component capable of preventing a short circuit defect even when a crack occurs.

Another aspect of the present disclosure provides a multilayer electronic component having excellent electrical properties such as capacitance or the like.

However, the aspects of the present disclosure are not limited to those set forth herein, and will be more easily understood in the course of describing specific example embodiments of the present disclosure.

According to an aspect of the present disclosure, there is provided a multilayer electronic component including a body having first and second surfaces opposing each other in a first direction, third and fourth surfaces opposing each other in a second direction and connected to the first and second surfaces, fifth and sixth surfaces opposing each other in a third direction and connected to the first to fourth surfaces, the body including a dielectric layer and first and second internal electrodes alternately disposed in the first direction with the dielectric layer interposed therebetween, a first external electrode connected to the first internal electrode, the first external electrode disposed on the third surface and extending onto portions of the first and second surfaces, and a second external electrode connected to the second internal electrode, the second external electrode disposed on the fourth surface and extending onto portions of the first and second surfaces. The body may include an overlapping region in which the first internal electrode overlaps the second internal electrode adjacent thereto in the first direction with the dielectric layer interposed therebetween. A length in the second direction of a central portion of the overlapping region in the first direction may be greater than that of both ends of the overlapping region in the first direction. The body may have a crack extending to the inside of the body from an end of at least one of the first and second external electrodes, the crack spaced apart from the overlapping region.

According to another aspect of the present disclosure, there is provided a multilayer electronic component including a body having first and second surfaces opposing each other in a first direction, third and fourth surfaces opposing each other in a second direction and connected to the first and second surfaces, fifth and sixth surfaces opposing each other in a third direction and connected to the first to fourth surfaces, the body including a plurality of dielectric layers and a plurality of first and second internal electrodes alternately disposed in the first direction with the respective dielectric layers interposed therebetween, a first external electrode connected to the first internal electrodes, the first external electrode disposed on the third surface and extending onto portions of the first and second surfaces, and a second external electrode connected to the second internal electrodes, the second external electrode disposed on the fourth surface and extending onto portions of the first and second surfaces. The body may include an overlapping region in which the first internal electrodes overlap the second internal electrodes adjacent thereto in the first direction with the respective dielectric layers interposed therebetween. A length in the second direction of a central portion of the overlapping region in the first direction may be greater than that of both ends of the overlapping region in the first direction. The body may further include a plurality of first dummy electrodes disposed to be spaced apart from the second internal electrodes in the second direction and connected to the first external electrode, and a plurality of second dummy electrodes disposed to be spaced apart from the first internal electrodes in the second direction and connected to the second external electrode. Among the plurality of first dummy electrodes, the first dummy electrode adjacent to a centermost second internal electrode of the plurality of second internal electrodes may have a minimum length in the second direction, and among the plurality of second dummy electrodes, the second dummy electrode adjacent to a centermost first internal electrode of the plurality of first internal electrodes may have a minimum length in the second direction. The dielectric layer disposed between the centermost first internal electrode and the centermost second internal electrode may be free of an internal electrode.

According to example embodiments of the present disclosure, a multilayer electronic component may prevent a short circuit defect even when a crack occurs.

According to example embodiments of the present disclosure, a multilayer electronic component may have excellent electrical properties such as capacitance or the like.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a schematic perspective view of a multilayer electronic component according to an example embodiment of the present disclosure;
FIG. 2 is a schematic cross-sectional view taken along line I-I' of FIG. 1;
FIG. 3 is a schematic cross-sectional view taken along line II-II' of FIG. 1;
FIG. 4 is an enlarged view of region "A" of FIG. 2;
FIG. 5 is a schematic cross-sectional view of a ceramic laminate for manufacturing a multilayer electronic component illustrated in FIG. 2;
FIG. 6 is a schematic cross-sectional view of a multilayer electronic component according to another example embodiment of the present disclosure, and corresponds to FIG. 2;
FIG. 7 is a schematic cross-sectional view of a ceramic laminate for manufacturing a multilayer electronic component illustrated in FIG. 6, and corresponds to FIG. 5;
FIG. 8 is a schematic cross-sectional view of a multilayer electronic component according to another example embodiment of the present disclosure, and corresponds to FIG. 2;
FIG. 9 is a schematic cross-sectional view of a ceramic laminate for manufacturing a multilayer electronic component illustrated in FIG. 8, and corresponds to FIG. 5; and
FIG. 10 is a schematic cross-sectional view of a state of a multilayer electronic component according to the related art in which a crack has occurred, and corresponds to FIG. 2.

### DETAILED DESCRIPTION

Hereinafter, example embodiments of the present disclosure are described with reference to the accompanying drawings. The present disclosure may, however, be exemplified in many different forms and should not be construed as being limited to the specific example embodiments set forth herein. In addition, example embodiments of the present disclosure may be provided for a more complete description of the present disclosure to those skilled in the art. Accordingly, the shapes and sizes of the elements in the drawings may be exaggerated for clarity of description, and elements denoted by the same reference numerals in the drawings may be the same elements.

In order to clearly illustrate the present disclosure, portions not related to the description are omitted, and sizes and thicknesses are magnified in order to clearly represent layers and regions, and similar portions having the same functions within the same scope are denoted by similar reference numerals throughout the specification. Throughout the specification, when an element is referred to as "comprising" or "including," it means that it may include other elements as well, rather than excluding other elements, unless specifically stated otherwise.

In the drawings, a first direction may be defined as a thickness (T) direction, a second direction may be defined as a length (L) direction, and a third direction may be defined as a width (W) direction.

### Multilayer Electronic Component

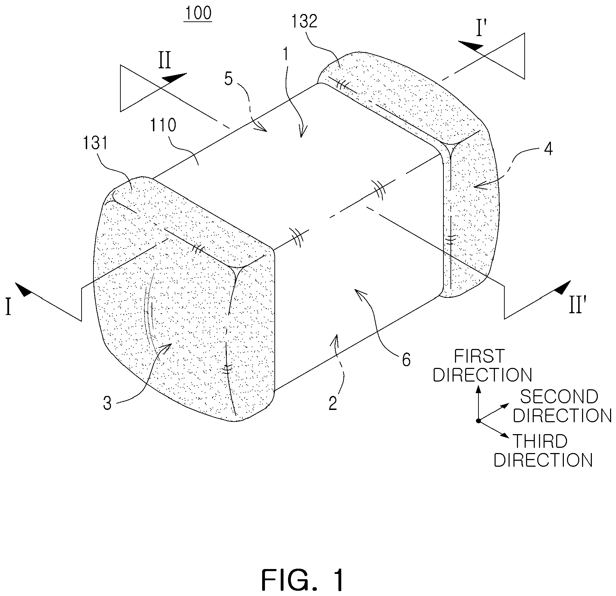

FIG. 1 is a schematic perspective view of a multilayer electronic component according to an example embodiment of the present disclosure.

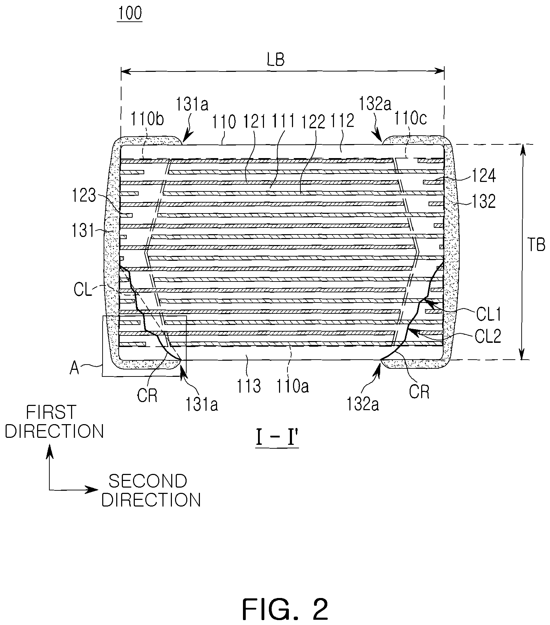

FIG. 2 is a schematic cross-sectional view taken along line I-I' of FIG. 1.

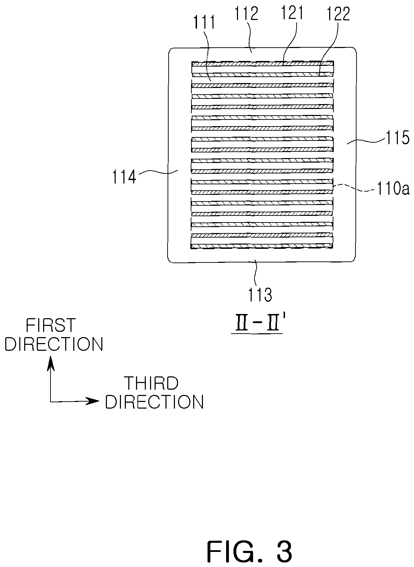

FIG. 3 is a schematic cross-sectional view taken along line II-II' of FIG. 1.

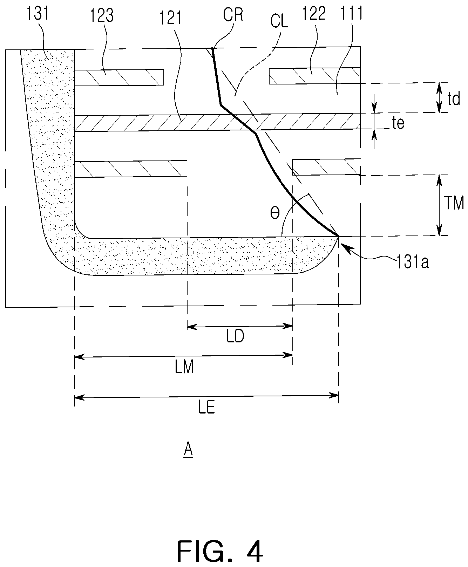

FIG. 4 is an enlarged view of region "A" of FIG. 1.

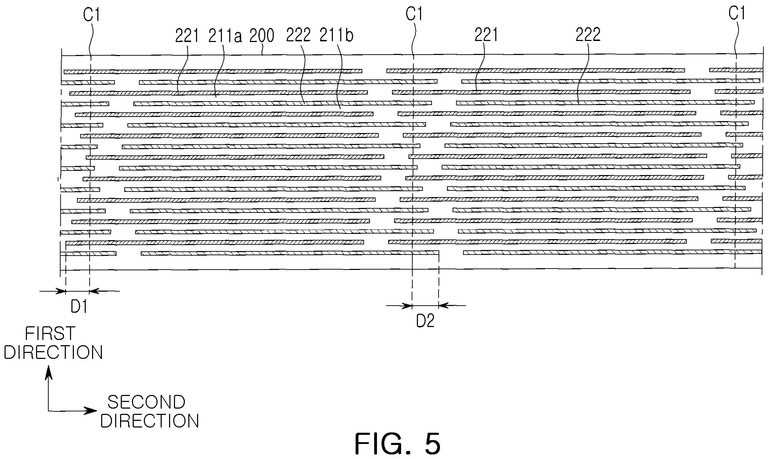

FIG. 5 is a schematic cross-sectional view of a ceramic laminate for manufacturing a multilayer electronic component illustrated in FIG. 2.

Hereinafter, a multilayer electronic component 100 according to an example embodiment of the present disclosure will be described in detail with reference to FIGS. 1 to 5. In addition, a multilayer ceramic capacitor (hereinafter referred to as "MLCC") is described as an example of the multilayer electronic component, but the present disclosure is not limited thereto, and may be applied to various electronic products, such as inductors, piezoelectric elements, varistors, thermistors, or the like.

As used hereinafter, the expression "substantially constant length" may refer to being a same length as other lengths compared therewith, as will be appreciated by those of skill in the art, and allows for approximations, inaccuracies and limits of measurement under the relevant circumstances. In one or more aspects, the terms "substantially," "about," and "approximately" may provide an industry-accepted tolerance for their corresponding terms and/or relativity between items, such as a tolerance of ± 1%, ± 5% , or ± 10% of the actual value stated, and other suitable tolerances.

The multilayer electronic component 100 according to an example embodiment of the present disclosure may include a body 110 including a dielectric layer 111 and internal electrodes 121 and 122, and external electrodes 131 and 132.

A specific shape of the body 110 is not particularly limited. However, as illustrated, the body 110 may have a hexahedral shape or a shape similar thereto. During a sintering process, ceramic powder particles, included in the body 110, may shrink or an edge portion of the body 110 may be polished, such that the body 110 may not have a hexahedral shape having perfectly straight lines, but may have a substantially hexahedral shape.

The body 110 may have first and second surfaces 1 and 2 opposing each other in the first direction, third and fourth surfaces 3 and 4 opposing each other in the second direction and connected to the first and second surfaces 1 and 2, and fifth and sixth surfaces 5 and 6 opposing each other in the third direction and connected to the first to fourth surfaces 1, 2, 3, and 4.

The body 110 may include a dielectric layer 111 and internal electrodes 121 and 122 disposed alternately with the dielectric layer 111 in the first direction. A plurality of dielectric layers 111, included in the body 110, may be in a sintered state, and adjacent dielectric layers 111 may be integrated with each other such that boundaries therebetween are not readily apparent without using a scanning electron microscope (SEM).

The dielectric layer 111 may include, for example, a perovskite-type compound, represented by ABO₃, as a main component. The perovskite-type compound, represented by ABO₃, may be, for example, (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), or Ba (Ti_{1-y}Zr_{y})O₃ (0<y<1) obtained by partially dissolving Ca or Zr in BaTiO₃.

An average thickness (td) of the dielectric layer 111 is not particularly limited. The average thickness (td) of the dielectric layer 111 may be, for example, 0.1 to 20 µm, 0.1 to 10 µm, 0.1 to 5 µm, 0.1 to 2 µm, or 0.1 to 0.4 µm.

The internal electrodes 121 and 122 may include, for example, a first internal electrode 121 and a second internal electrode 122 alternately disposed in the first direction with the dielectric layer 111 interposed therebetween. The first internal electrode 121 and the second internal electrode 122, a pair of electrodes having different polarities, may be disposed to oppose each other with the dielectric layer 111 interposed therebetween. The first internal electrode 121 and the second internal electrode 122 may be electrically isolated from each other by the dielectric layer 111 interposed therebetween.

The first internal electrode 121 may be spaced apart from the fourth surface 4, and may be connected to the first external electrode 131 on the third surface 3. The second internal electrode 122 may be spaced apart from the third surface 3, and may be connected to the second external electrode 132 on the fourth surface 4.

A conductive metal, included in the internal electrodes 121 and 122, may be one or more of Ni, Cu, Pd, Ag, Au, Pt, Sn, W, Ti, and alloys thereof, and may be more preferably Ni, but the present disclosure is not limited thereto.

An average thickness (te) of each of the internal electrodes 121 and 122 is not particularly limited. The average thickness (te) of each of the internal electrodes 121 and 122 may be, for example, 0.1 µm to 3.0 µm, 0.1 µm to 1.0 µm, or 0.1 µm to 0.4 µm.

The average thickness (td) of the dielectric layer 111 and the average thickness (te) of each of the internal electrodes 121 and 122 may respectively refer to a size of the dielectric layer 111 in the first direction, and a size of each of the internal electrodes 121 and 122 in the first direction. The average thickness (td) of the dielectric layer 111 and the average size (te) of each of the internal electrodes 121 and 122 may be measured, for example, by scanning, with an SEM, a cross-section of the body 110 in the first and second directions at a magnification of 10,000. More specifically, the average thickness (td) of the dielectric layer 111 may be measured by measuring thicknesses of one dielectric layer 111 at multiple points of the dielectric layer 111, for example, thirty points equally spaced apart from each other in the second direction, and calculating an average value of the thicknesses. In addition, the average thickness (te) of each of the internal electrodes 121 and 122 may be measured by measuring thicknesses of each of the internal electrodes 121 and 122 at multiple points of each of the internal electrodes 121 and 122, for example, thirty points equally spaced apart from each other in the second direction, and calculating an average value of the thicknesses. The thirty points, equally spaced apart from each other, may be designated in an overlapping region 110a. When such average value measurement is performed on ten dielectric layers 111 and ten internal electrodes 121 and 122, the average thickness (td) of the dielectric layer 111 and the average thickness (te) of each of the internal electrodes 121 and 122 may be further generalized.

The body 110 may include an overlapping region 110a in which the first internal electrode 121 overlaps the second internal electrode 122 adjacent thereto in the first direction with the dielectric layer 111 interposed therebetween, a first margin region 110b disposed between the overlapping region 110a and the third surface 3, the first margin region 110b in which the second internal electrode 122 is not disposed, and a second margin region 110c disposed between the overlapping region 110a and the fourth surface 4, the second margin region 110c in which the first internal electrode 121 is not disposed.

The body 110 may include a first cover portion 112 and a second cover portion 113, disposed on both surfaces of the overlapping region 110a opposing each other in the first direction. The first cover portion 112 may be continuously disposed on one surface of the overlapping region 110a in the first direction, one surface of the first margin region 110b in the first direction, and one surface of the second margin region 110c in the first direction. The second cover portion 113 may be continuously disposed on the other surface of the overlapping region 110a in the first direction, one surface of the first margin region 110b in the first direction, and the other surface of the second margin region 110c in the first direction. The cover portions 112 and 113 may basically serve to prevent damage to an internal electrode due to physical or chemical stress. The cover portions 112 and 113 may have a configuration similar to that of the dielectric layer 111, except that an internal electrode is not included.

An average thickness of each of the cover portions 112 and 113 is not particularly limited. The average thickness of each of the cover portions 112 and 113 may be, for example, 150 um or less, 100 um or less, 30 um or less, or 20 µm or less. The average thickness of each of the cover portions 112 and 113 may be, for example, 5 um or more, 10 µm or more, or 30 um or more. Here, the average thickness of each of the cover portions 112 and 113 may refer to an average thickness of each of the first cover portion 112 and the second cover portion 113. The average thickness of each of the cover portions 112 and 113 may refer to an average thickness of each of the cover portions 112 and 113 in the first direction, and may be an average value of thicknesses of each of the cover portions 112 and 113 in the first direction, measured at five equally spaced points in the second direction in the cross-section of the body 110 in the first and second directions.

The body 110 may include a first margin portion 114 and a second margin portion 115, disposed on both surfaces of the overlapping region 110a opposing each other in the third direction. The first margin portion 114 may be continuously disposed on one surface of the overlapping region 110a in the third direction, one surface of the first margin region 110b in the third direction, and one surface of the second margin region 110c in the third direction. The second margin portion 115 may be continuously disposed on the other surface of the overlapping region 110a in the third direction, the other surface of the first margin region 110b in the third direction, and the other surface of the second margin region 110c in the third direction. Each of the margin portions 114 and 115 may refer to a region between both ends of each of the internal electrodes 121 and 122 and a boundary surface of the body 110 in a cross-section of the body 110 in the first and third directions. The margin portions 114 and 115 may have a configuration similar to that of the dielectric layer 111, except that the internal electrodes 121 and 122 are not included.

An average thickness of each of the margin portions 114 and 115 is not particularly limited. The average thickness of each of the margin portions 114 and 115 may be, for example, 150 um or less, 100 um or less, 20 um or less, or 15 µm or less. The average thickness of each of the margin portions 114 and 115 may be, for example, 5 um or more, 10 um or more, or 30 µm or more. Here, the average thickness of each of the margin portions 114 and 115 may refer to an average thickness of each of the first and second margin portions 114 and 115. The average thickness of each of the margin portions 114 and 115 may refer to an average size of each of the margin portions 114 and 115 in the third direction, and may be an average value of thicknesses of each of the margin portions 114 and 115 in the third direction, measured at five equally spaced points in the first direction in the cross-section of the body 110 in the first and third directions.

The external electrodes 131 and 132 may include a first external electrode 131 connected to the first internal electrode 121, the first external electrode 131 disposed on the third surface 3 and extending onto portions of the first and second surfaces 1 and 2, and a second external electrode 132 connected to the second internal electrode 122, the second external electrode 132 disposed on the fourth surface 4 and extending onto portions of the first and second surface 1 and 2. The first external electrode 131 may be disposed on the third surface 3 and extending onto a portion of each of the first surface 1, the second surface 2, the fifth surface 5 and the sixth surface 6, and the second external electrode 132 may be disposed on the fourth surface 4 to extend to a portion of each of the first surface 1, the second surface 2, the fifth surface 5, and the sixth surface 6.

A type or shape of the external electrode is not particularly limited, and the external electrode may have a multilayer structure. For example, the external electrode may include a base electrode layer in contact with the internal electrodes 121 and 122, and a plating layer disposed on the base electrode layer.

The base electrode layer may be a sintered electrode including a metal and glass. The metal, included in the base electrode layer, may include Cu, Ni, Pd, Pt, Au, Ag, Pb, and/or an alloy including the same, but the present disclosure is not limited thereto. The glass, included in the base electrode layer, may include one or more oxides of Ba, Ca, Zn, Al, B, and Si, but the present disclosure is not limited thereto.

The base electrode layer may be formed of only a first layer including a metal and glass, but the present disclosure is not limited thereto, and the base electrode layer may have a multilayer structure. For example, the base electrode layer may include a first layer including a metal and glass, and a second layer disposed on the first layer, the second layer including a metal and a resin.

The metal, included in the second layer, may include one or more of spherical particles and flake-type particles. Here, the spherical particles may have a shape that is not completely spherical, for example, a shape in which a length ratio (long axis/short axis) between a long axis and a short axis is 1.45 or less. The flake-type particles may refer to particles having a flat and elongated shape, but the present disclosure is not particularly limited thereto. For example, the flake-type particles may have a shape in which a length ratio (long axis/short axis) between a long axis and a short axis may be 1.95 or more. The metal, included in the second layer, may include, for example, Cu, Ni, Pd, Pt, Au, Ag, Pb, Sn and/or an alloy including the same. The resin, included in the second layer, may include, for example, one or more of an epoxy resin, an acrylic resin, and ethyl cellulose.

The plating layer may improve mounting properties. A type of the plating layer is not particularly limited, and may be a plating layer including Ni, Sn, Pd, and/or an alloy including the same, and may be formed of a plurality of layers. The plating layer may be, for example, a Ni plating layer or a Sn plating layer, or may be a Ni plating layer and a Sn plating layer, sequentially formed. In addition, the plating layer may include a plurality of Ni plating layers and/or a plurality of Sn plating layers.

In the drawings, a structure is illustrated in which the multilayer electronic component 100 has two external electrodes 131 and 132, but the present disclosure is not limited thereto, and the number or shapes of the external electrodes 131 and 132 may be changed depending on shapes of the internal electrodes 121 and 122 or other purposes.

When flexural stress is applied to the multilayer electronic component 100, the stress may be concentrated on ends 131a and 132a of the external electrodes, and accordingly, the body 110 may have a crack CR extending to the inside of the body 110 from an end of at least one of the first and second external electrodes 131 and 132. The crack CR may extend from an end 131a of the first external electrode to the third surface 3 through the first margin region 110b, or from an end 132a of the second external electrode to the fourth surface 4 through the second margin region 110c. The existence of this type of crack CR in the body 110 may be attributed to the stress applied by the ends 131a and 132a of the external electrodes, which outwardly pull the regions of the body 110 in contact with them. A propagation path of the crack CR may vary depending on a density of a medium. For example, a slope in the second direction of at least a portion of a section CL2 of the crack CR, passing through the dielectric layer, may be steeper, based on a plane of incidence, than a slope in the second direction of a section CL1 of the crack CR, passing through the first or second internal electrode.

According to an example embodiment of the present disclosure, a length in the second direction of a central portion of the overlapping region 110a in the first direction may be greater than that of both ends of the overlapping region 110a in the first direction. For example, a length in the second direction of a central portion of each of the margin regions 110b and 110c in the first direction may be shorter than that of both ends of each of the margin regions 110b and 110c in the first direction. The length in the second direction of the central portion of the overlapping region 110a in the first direction may be greater than that of both ends of the overlapping region 110a in the first direction, such that the crack CR may be spaced apart from the overlapping region 110a even when the crack CR is present in the body 110.

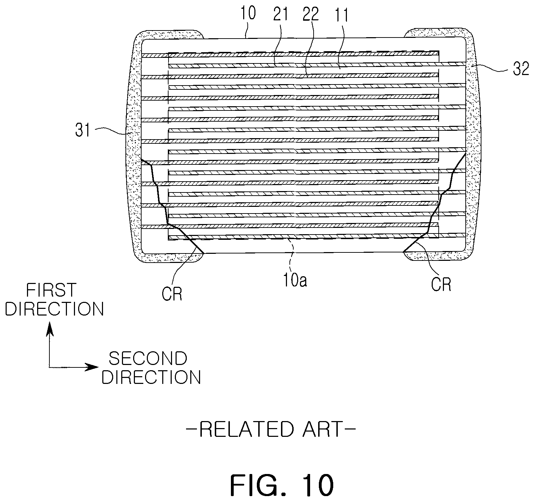

FIG. 10 is a schematic cross-sectional view of a state of a multilayer electronic component according to the related art in which a crack has occurred, and corresponds to FIG. 2. Referring to FIG. 10, a body 10 of the multilayer electronic component according to the related art may include an overlapping region 10a in which a first internal electrode 21 overlaps a second internal electrode 22 adjacent thereto with a dielectric layer 11 interposed therebetween. However, a length of the overlapping region 10a in the second direction may be generally constant in a central portion of the overlapping region 10a in the first direction and both ends of the overlapping region 10a in the first direction.

In a case according to the related art, when a crack CR propagates from ends of external electrodes 31 and 32 to the inside of the body 10, the crack CR may pass through the overlapping region 10a, resulting in a short circuit defect. In order to resolve such an issue, a method of reducing an overall length of the overlapping region 10a in the second direction to prevent the crack CR from extending to the inside of the overlapping region 10a may be considered. However, as the length of the overlapping region 10a in the second direction is reduced, a side effect of lowering capacitance and DC-bias properties of the multilayer electronic component may occur.

The multilayer electronic component 100 according to an example embodiment of the present disclosure has a structure in which the central portion of the overlapping region 110a in the first direction, having a longer distance from the crack CR, has a length in the second direction longer than that of both ends of the overlapping region 110a, having a shorter distance from the crack CR, thereby preventing the crack CR from propagating to the inside of the overlapping region 110a to prevent a short circuit defect from occurring, and improving capacitance and DC-bias properties of the multilayer electronic component 100 as compared to a case in which an overall length of the overlapping region 110a in the second direction is reduced.

It may be sufficient when the length in the second direction of the central portion of the overlapping region 110a in the first direction is greater than that of both ends of the overlapping region 110a in the first direction, and a specific shape of the overlapping region 110a is not particularly limited. For example, a length of the overlapping region 110a in the second direction may gradually decrease from the central portion of the overlapping region 110a in the first direction to both ends of the overlapping region 110a in the first direction. For example, a length in the second direction in which the first external electrode 131 and the second internal electrode 122 are spaced apart from each other may gradually increase from the central portion of the overlapping region 110a in the first direction to both ends of the overlapping region 110a in the first direction, and a length in the second direction in which the second external electrode 132 and the first internal electrode 121 are spaced apart from each other may gradually increase from the central portion of the overlapping region 110a in the first direction to both ends of the overlapping region 110a in the first direction. As a result, the present disclosure may have a more significant effect of improving capacitance and DC-bias properties while preventing a short circuit defect from occurring.

A distance in the second direction between the overlapping region 110a and the crack CR may gradually increase from both ends of the overlapping region 110a in the first direction toward the central portion of the overlapping region 110a in the first direction, but the present disclosure is not limited thereto.

Referring to FIGS. 2 and 4, in an example embodiment, in the cross-section of the body 110 in the first and second directions, a distance in the second direction (LE) between the third surface and an end of the first external electrode in the second direction may be greater than a distance in the second direction (LM) between the third surface and the second internal electrode disposed on an outermost portion of the body 110 in the first direction. That is, LE>LM may be satisfied.

The crack CR, propagating from the ends 131a and 132a of the external electrodes to the inside of the body 110, may easily occur as high pressure is applied to the multilayer electronic component 100. When LE is shorter than the LM in order to prevent a short circuit defect from occurring due to the crack CR from extending to the inside of the overlapping region 110a, flexural strength of a high-pressure electronic component may not be ensured.

That is, when the crack CR, extending to the inside of the body 110 from the ends 131a and 132a of the external electrodes, is spaced apart from the overlapping region 110a and LE>LM is satisfied, a certain or higher level of flexural strength may be ensured while preventing a short circuit from occurring in a high-pressure electronic component.

In an example embodiment, when a distance in the first direction between a crack surface having a crack on the end 131a of the first external electrode, among the first and second surfaces 1 and 2, and the second internal electrode 122 disposed on the outermost portion of the body 110 is denoted by TM, and an angle between a straight line CL connecting one end and the other end of the crack to each other and the crack surface is denoted by θ, LM>LE-TM×tan (90°-θ) may be satisfied. In FIGS. 3 and 4, the crack surface may be the second surface. One end of the crack CR, present on the end 131a of the first external electrode, may be positioned on the second surface, and the other end of the crack CR may be positioned on the third surface 3. When LM>LE-TM×tan (90°-θ) is satisfied, a certain or higher level of flexural strength may be ensured while preventing a short circuit defect from occurring in a high-pressure electronic component. θ may be, for example, 60° to 70°.

When LM>LE-TM×tan (90°-θ) is satisfied, LM is not particularly limited. However, when a length of the body in the second direction is denoted by LB, a ratio (LM/LB) of LM to LB may be 0.05 to 0.4.

In addition, TM is not particularly limited, but a thickness of the cover portion may increase as TM increases, and thus a crack CR may be less likely to occur in the multilayer electronic component 100, and may not extend to the inside of the overlapping region 110a even when the crack CR occurs. However, as TM increases, a volume of the overlapping region 110a may decrease in a total volume of the body 110, and thus the multilayer electronic component 100 may have reduced capacitance. In the present disclosure, the length in the second direction of the central portion of the overlapping region 110a in the first direction may be greater than that of both ends of the overlapping region 110a in the first direction. Thus, even when a ratio (TM/TB) of TM to a thickness (TB) of the body 110 in the first direction of the body 110 is 0.3 or less, a certain or higher level of flexural strength and capacitance may be ensured while preventing a short circuit defect from occurring in a multilayer electronic component. A lower limit of the ratio (TM/TB) of TM to TB is not particularly limited, but may be 0.05 or more.

In an example embodiment, the body 110 may include a first dummy electrode 123 disposed to be spaced apart from the second internal electrode 122 in the second direction, the first dummy electrode 123 connected to the first external electrode 131, and a second dummy electrode 124 disposed to be spaced apart from the first internal electrode 121 in the second direction, the second dummy electrode 124 connected to the second external electrode 132. The first dummy electrode 123 may be substantially coplanar with the second internal electrode 122, and the second dummy electrode 124 may be substantially coplanar with the first internal electrode 121.

The dummy electrodes 123 and 124 may be appropriately formed on the body 110, such that a multilayer electronic component according to an example embodiment of the present disclosure may be manufactured without increasing a type of internal electrode pattern printed on a ceramic green sheet to be described below.

In an example embodiment, a length of the first dummy electrode 123 in the second direction, measured in the central portion of the overlapping region 110a in the first direction, may be shorter than a length of the first dummy electrode 123 in the second direction, measured in both ends of the overlapping region 110a in the first direction. In addition, a length of the second dummy electrode 124 in the second direction, measured in the central portion of the overlapping region 110a in the first direction, may be shorter than a length of the second dummy electrode 124 in the second direction, measured in both ends of the overlapping region 110a in the first direction.

For example, the length of the first dummy electrode 123 in the second direction may increase from a center of the body 110 in the first direction toward an outer portion of the body 110 in the first direction, and the length of the second dummy electrode 124 in the second direction may increase from the center of the body 110 in the first direction toward the outer portion of the body 110 in the first direction.

In an example embodiment, a gap between the first dummy electrode 123 and the second internal electrode 122 in the second direction may be substantially constant from a topmost first dummy electrode to a bottommost first dummy electrode. Likewise, a gap between the second dummy electrode 124 and the first internal electrode 121 in the second direction may be substantially constant from a topmost second dummy electrode to a bottommost second dummy electrode.

In an example embodiment, when a distance in a second direction between the second internal electrode 122, disposed on the outermost portion of the body 110 in the first direction, and the first dummy electrode 123, disposed on the outermost portion of the body 110 in the first direction, is denoted by LD, a ratio (LD/LM) of LD to LM may be 0.3 or more. When LD/LM is less than 0.3, the second internal electrode 122 and the first dummy electrode 123 may come into contact with each other to cause a short circuit defect. An upper limit of LD/LM is not particularly limited, but may be 0.8 or less.

Hereinafter, an example of a method of forming the multilayer electronic component 100 according to an example embodiment of the present disclosure will be described with reference to FIG. 5.

First, ceramic powder particles for forming ceramic green sheets 211a and 211b may be prepared. The ceramic powder particles may be (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1), or Ba (Ti_{1-y}Zr_{y})O₃ (0<y<1) obtained by partially dissolving Ca or Zr in BaTiO₃. BaTiO₃ powder particles may be synthesized, for example, by reacting a titanium raw material such as titanium dioxide with a barium raw material such as barium carbonate. A method of synthesizing the ceramic powder particles may include, for example, a solid-phase method, a sol-gel method, and a hydrothermal synthesis method, but the present disclosure is not limited thereto. Subsequently, the prepared ceramic powder particles may be dried and ground, an organic solvent such as ethanol and a binder such as polyvinyl butyral may be mixed to prepare a ceramic slurry, and then the ceramic slurry may be coated and dried on a carrier film to prepare the ceramic green sheets 211a and 211b.

Subsequently, the internal electrode patterns 221 and 222 may be formed on the ceramic green sheets 211a and 211b by printing a conductive paste for an internal electrode, including metal powder particles, a binder, an organic solvent or the like, to have a predetermined thickness using a screen-printing method, a gravure-printing method, or the like. More specifically, a plurality of first internal electrode patterns 221 may be formed on a first ceramic green sheet 211a, and a plurality of second internal electrode patterns 222 may be formed on a second ceramic green sheet 211b.

Subsequently, the ceramic green sheets 211a and 211b on which the internal electrode patterns 221 and 222 are printed may be peeled off from the carrier film. Subsequently, the first ceramic green sheet 211a on which the first internal electrode pattern 221 is formed and the second ceramic green sheet 211b on which the second internal electrode pattern is formed may be alternately laminated to correspond to a predetermined number of layers and then compressed to form a ceramic laminate 200 illustrated in FIG. 5. A ceramic green sheet on which an internal electrode pattern is not formed may be laminated on upper and lower portions of the ceramic laminate 200 to correspond to a predetermined number of layers to form the cover portions 112 and 113 on which sintering has been performed. Thereafter, the ceramic laminate 200 may be cut along a cutting line C1 to have a predetermined chip size, and the cut chip may be sintered at a temperature, for example, greater than or equal to 1000°C and less than or equal to 1400°C to form the body 110. In this case, a length D1 in which an end of the first internal electrode pattern is offset with respect to the cutting line C1 increases from a central portion of the ceramic laminate 200 in the first direction toward both ends of the ceramic laminate 200 in the first direction. In addition, a length D2 in which an end of the second internal electrode pattern is offset with respect to the cutting line C1 increases from the central portion of the ceramic laminate 200 in the first direction toward both ends of the ceramic laminate 200 in the first direction. As a result, the length in the second direction of the central portion of the overlapping region 110a in the first direction on which sintering has been performed may be greater than that of both ends of the overlapping region 110a in the first direction.

The margin portions 114 and 115 may be formed by coating a ceramic green sheet with a conductive paste for an internal electrode, except for a portion of the ceramic green sheet on which a margin portion is to be formed. Alternatively, in order to suppress a step caused by the internal electrodes 121 and 122, the ceramic laminate may be cut such that the internal electrode pattern is exposed on both surfaces of the cut chip in the third direction, and then the sheet for forming the margin portions may be attached to both surfaces of the cut chip in the third direction, and then sintered to form the margin portions 114 and 115.

Thereafter, the body 110 may be dipped in a conductive paste including metal powder particles, a glass frit, a binder, and an organic solvent, and then the conductive paste may be sintered to form a base electrode layer. When the base electrode layer includes a first layer including a metal and glass, and a second layer including a metal and a resin, the second layer may be formed on the first layer by dipping in a conductive resin composition including metal powder particles, a resin, a binder, and an organic solvent, and then performing curing heat treatment at a temperature of 250°C to 550°C. Subsequently, the multilayer electronic component 100 may be manufactured by forming a plating layer using an electroplating method and/or an electroless plating method.

A crack CR extending from an end of the external electrode to the inside of the body 110 may be formed by flexural stress applied to the multilayer electronic component 100. However, the length in the second direction of the central portion of the overlapping region 110a in the first direction may be greater than that of both ends of the overlapping region 110a in the first direction, such that the crack CR may be spaced apart from the overlapping region 110a.

However, the above-described manufacturing method is an example, and the method of manufacturing the multilayer electronic component 100 is not limited to the above-described manufacturing method.

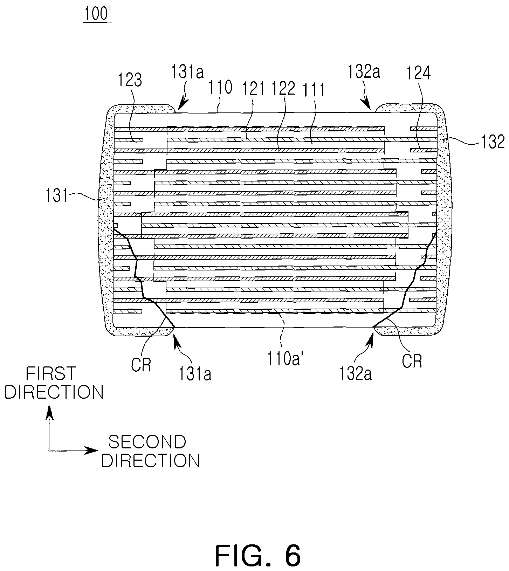

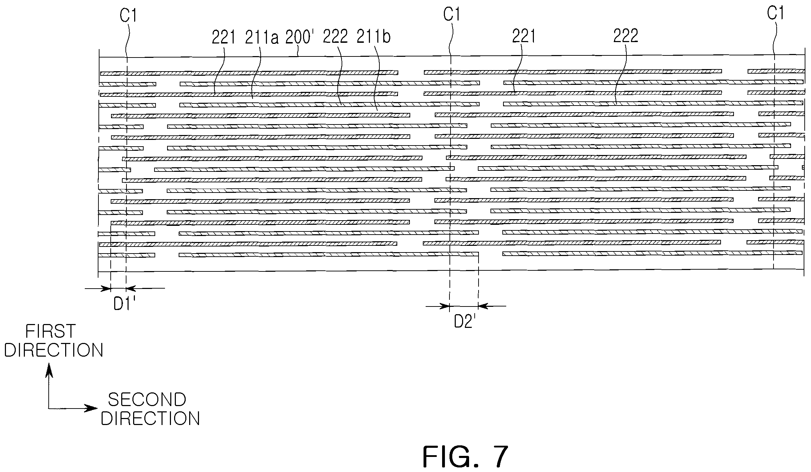

FIG. 6 is a schematic cross-sectional view of a multilayer electronic component 100' according to another example embodiment of the present disclosure, and corresponds to FIG. 2. FIG. 7 is a schematic cross-sectional view of a ceramic laminate 200' for manufacturing the multilayer electronic component 100' illustrated in FIG. 6, and corresponds to FIG. 5.

Hereinafter, a multilayer electronic component 100' and a ceramic laminate 200' for manufacturing the multilayer electronic component 100' according to another example embodiment of the present disclosure will be described with reference to FIGS. 6 and 7. The same/similar reference numerals are used for components the same as/similar to those of the multilayer electronic component 100 and the ceramic laminate 200 illustrated in FIGS. 1 to 5, and thus repeated descriptions will be omitted.

Referring to FIG. 6, a length of an overlapping region 110a' in the second direction may decrease in a stepwise manner from a central portion of the overlapping region 110a' in the first direction toward both ends of the overlapping region 110a' in the first direction.

The multilayer electronic component 100' according to an example embodiment of the present disclosure may have a structure in which the length of the overlapping region 110a' in the second direction decreases in a stepwise manner from the central portion of the overlapping region 110a' in the first direction to both ends of the overlapping region 110a' in the first direction, thereby preventing a crack CR from propagating to the inside of the overlapping region 110a' to prevent a short circuit defect from occurring, and improving capacitance and DC-bias properties of the multilayer electronic component 100' as compared to a case in which an overall length of the overlapping region 110a' in the second direction is reduced.

Referring to FIG. 7, in a ceramic laminate 200' for manufacturing the multilayer electronic component 100', a length D1' in which an end of a first internal electrode pattern is offset with respect to a cutting line C1 may increase in a stepwise manner from a central portion of the ceramic laminate 200' in the first direction to both ends of the ceramic laminate 200' in the first direction. In addition, a length D2' in which an end of a second internal electrode pattern is offset with respect to the cutting line C1 may increase in a stepwise manner from the central portion of the ceramic laminate 200' in the first direction to both ends of the ceramic laminate 200' in the first direction. As a result, a length of the overlapping region 110a' in the second direction on which sintering has been performed may be formed to decrease in a stepwise manner from the central portion of the overlapping region 110a' in the first direction to both ends of the overlapping region 110a' in the first direction. However, the above-described manufacturing method is an example, and the method of manufacturing the multilayer electronic component 100' is not limited to the above-described manufacturing method.

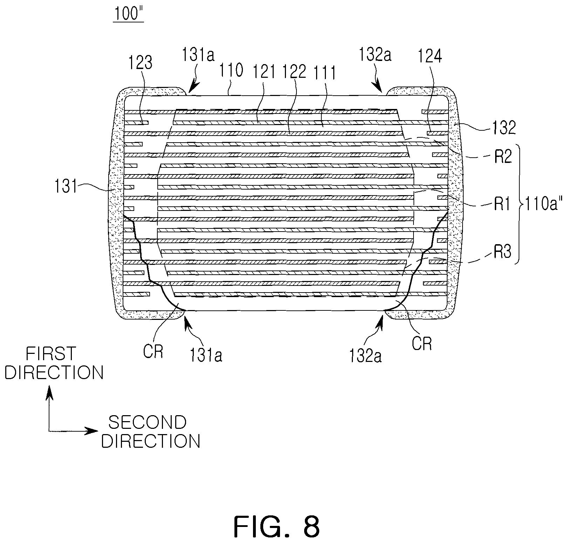

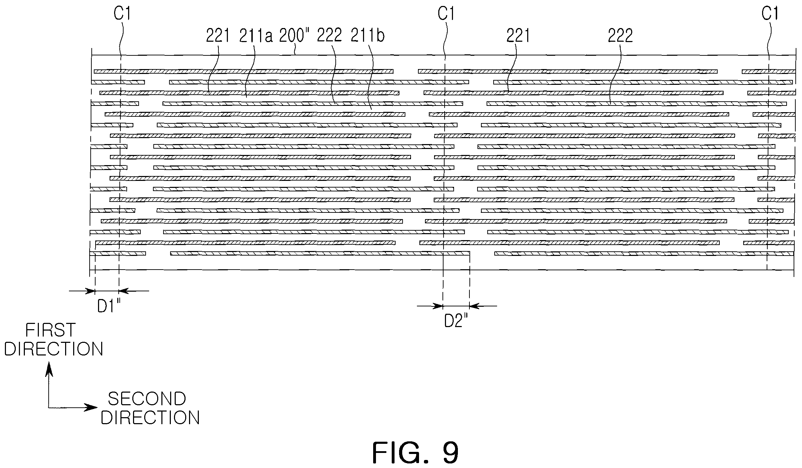

FIG. 8 is a schematic cross-sectional view of a multilayer electronic component 100" according to another example embodiment of the present disclosure, and corresponds to FIG. 2. FIG. 9 is a schematic cross-sectional view of a ceramic laminate 200" for manufacturing the multilayer electronic component 100" illustrated in FIG. 8, and corresponds to FIG. 5.

Hereinafter, a multilayer electronic component 100'' and a ceramic laminate 200" for manufacturing the multilayer electronic component 100" according to another example embodiment of the present disclosure will be described with reference to FIGS. 8 and 9. The same/similar reference numerals are used for components the same as/similar to those of the multilayer electronic component 100 and the ceramic laminate 200 illustrated in FIGS. 1 to 5, and thus repeated descriptions will be omitted.

Referring to FIG. 8, the overlapping region 110a" may include a first region R1 disposed in the central portion of the overlapping region 110a'' in the first direction, the first region R1 having a substantially constant length in the second direction, and second regions R2 and R3 having a length in the second direction gradually decreasing from the first region R1 to both ends of the overlapping region 110a'' in the first direction. Here, the first region R1, having a substantially constant length in the second direction, may mean that a length is sufficiently constant such that those skilled in the art could understood that the length is constant, and may mean that the length is the same, including a process error, positional deviation, and measurement error occurring in a manufacturing process.

The multilayer electronic component 100'' according to an example embodiment of the present disclosure may include the second regions R2 and R3 in which a length of the overlapping region 110a" in the second direction gradually decreases toward both ends of the overlapping region 110a" in the first direction, thereby preventing a crack CR from propagating to the inside of the overlapping region 110a'' to prevent a short circuit defect from occurring, and improving capacitance and DC-bias properties of the multilayer electronic component 100" as compared to a case in which an overall length of the overlapping region 110a'' in the second direction is reduced.

Referring to FIG. 9, the ceramic laminate 200" for manufacturing the multilayer electronic component 100" may be designed such that it has a section where a length D1" in which an end of a first internal electrode pattern is offset with respect to a cutting line C1 gradually increases from the inside of the ceramic laminate 200" in the first direction toward both ends of the ceramic laminate 200" in the first direction, and a section where the length D1" in which the end of the first internal electrode pattern is offset is substantially constant in the central portion of the ceramic laminate 200" in the first direction. In addition, the ceramic laminate 200" for manufacturing the multilayer electronic component 100" may be designed such that it has a section where a length D2" in which an end of a second internal electrode pattern is offset with respect to the cutting line C1 increases from the inside of the ceramic laminate 200" in the first direction toward both ends of the ceramic laminate 200" in the first direction, and a section where the length D2'' in which the end of the second internal electrode pattern is offset is substantially constant in the central portion of the ceramic laminate 200" in the first direction.

Accordingly, the overlapping region 110a'' may include a first region R1 disposed on the central portion of the overlapping region 110a" in the first direction, the first region R1 having a substantially constant length in the second direction, and second regions R2 and R3 having a length in the second direction gradually decreasing from the first region R1 to both ends of the overlapping region 110a" in the first direction. However, the above-described manufacturing method is an example, and the method of manufacturing the multilayer electronic component 100" is not limited to the above-described manufacturing method.

While example embodiments have been illustrated and described above, it will be apparent to those skilled in the art that modifications and variations could be made without departing from the scope of the present disclosure as defined by the appended claims.

In addition, the term "an example embodiment" used herein does not refer to the same example embodiment, and is provided to emphasize a particular feature or characteristic different from that of another example embodiment. However, example embodiments provided herein are considered to be able to be implemented by being combined in whole or in part one with one another. For example, one element described in a particular example embodiment, even if it is not described in another example embodiment, may be understood as a description related to another example embodiment, unless an opposite or contradictory description is provided therein.

As used herein, the terms "first," "second," and the like may be used to distinguish a component from another component, and may not limit a sequence and/or an importance, or others, in relation to the components. In some cases, a first component may be referred to as a second component, and similarly, a second component may be referred to as a first component without departing from the scope of the example embodiments.

## Claims

1. A multilayer electronic component comprising:
a body having first and second surfaces opposing each other in a first direction, third and fourth surfaces opposing each other in a second direction and connected to the first and second surfaces, fifth and sixth surfaces opposing each other in a third direction and connected to the first to fourth surfaces, the body including a dielectric layer and first and second internal electrodes alternately disposed in the first direction with the dielectric layer interposed therebetween;
a first external electrode connected to the first internal electrode, the first external electrode disposed on the third surface and extending onto portions of the first and second surfaces; and
a second external electrode connected to the second internal electrode, the second external electrode disposed on the fourth surface and extending onto portions of the first and second surfaces,
wherein the body includes an overlapping region in which the first internal electrode overlaps the second internal electrode adjacent thereto in the first direction with the dielectric layer interposed therebetween,
a length in the second direction of a central portion of the overlapping region in the first direction is greater than that of both ends of the overlapping region in the first direction, and
the body has a crack extending to an inside of the body from an end of at least one of the first and second external electrodes, the crack spaced apart from the overlapping region.

2. The multilayer electronic component of claim 1, wherein
the body includes a first margin region disposed between the overlapping region and the third surface and free of the second internal electrode, and a second margin region disposed between the overlapping region and the fourth surface and free of the first internal electrode, and
the crack extends from an end of the first external electrode to the third surface through the first margin region or from an end of the second external electrode to the fourth surface through the second margin region.

3. The multilayer electronic component of claim 1, wherein
in a cross-section of the body in the first and second directions,
when a distance in the second direction between the third surface and the second internal electrode disposed on an outermost portion of the body in the first direction is denoted by LM, and a distance in the second direction between the third surface and the end of the first external electrode is denoted by LE, LE>LM is satisfied.

4. The multilayer electronic component of claim 3, wherein, when a distance between a crack surface having a crack on the end of the first external electrode, among the first and second surfaces, and the second internal electrode disposed on the outermost portion of the body in the first direction is denoted by TM, and an angle between a straight line connecting one end and the other end of the crack to each other and the crack surface is denoted by θ, LM>LE-TM×tan(90°-θ) is satisfied.

5. The multilayer electronic component of claim 4, wherein θ is 60° or more and 70° or less.

6. The multilayer electronic component of claim 4, wherein, when a thickness of the body in the first direction is denoted by TB, a ratio of TM to TB (TM/TB) is 0.05 or more and 0.3 or less.

7. The multilayer electronic component of claim 2, wherein a slope in the second direction of at least a portion of a section of the crack, passing through the dielectric layer, is steeper, based on a plane of incidence, than a slope in the second direction of a section of the crack, passing through the first or second internal electrode.

8. The multilayer electronic component of claim 1, wherein the body further includes a first dummy electrode disposed to be spaced apart from the second internal electrode in the second direction and connected to the first external electrode, and a second dummy electrode disposed to be spaced apart from the first internal electrode in the second direction and connected to the second external electrode.

9. The multilayer electronic component of claim 8, wherein a length of the first dummy electrode in the second direction, measured in the central portion of the overlapping region in the first direction, is less than a length of the first dummy electrode in the second direction, measured in both ends of the overlapping region in the first direction.

10. The multilayer electronic component of claim 1, wherein a length of the overlapping region in the second direction gradually decreases from the central portion of the overlapping region in the first direction toward both ends of the overlapping region in the first direction.

11. The multilayer electronic component of claim 10, wherein
a length in the second direction in which the first external electrode and the second internal electrode are spaced apart from each other gradually increases from the central portion of the overlapping region in the first direction toward both ends of the overlapping region in the first direction, and
a length in the second direction in which the second external electrode and the first internal electrode are spaced apart from each other gradually increases from the central portion of the overlapping region in the first direction toward both ends of the overlapping region in the first direction.

12. The multilayer electronic component of claim 1, wherein a length of the overlapping region in the second direction decreases in a stepwise manner from the central portion of the overlapping region in the first direction to both ends of the overlapping region in the first direction.

13. The multilayer electronic component of claim 1, wherein the overlapping region includes a first region disposed on the central portion of the overlapping region in the first direction, the first region having a substantially constant length in the second direction, and a second region having a length in the second direction gradually decreasing from the first region to both ends of the overlapping region in the first direction.
